# FASCICULE DE BREVET EUROPEEN

(11) **EP 4 305 718 B1**
(45) Date de publication et mention de la délivrance du brevet: **06.05.2026**
(21) Numéro de dépôt: 22713583.7
(22) Date de dépôt: 07.03.2022
(51) Int. Cl.: H02G 3/04, F16L 3/04, F16L 3/24, H02G 3/32, F16L 3/26

(54) **DISPOSITIF DE MAINTIEN D'UN FAISCEAU DE CABLES, CHEMIN DE CABLES EQUIPÉ D'AU MOINS UN TEL DISPOSITIF ET PROCEDÉ DE MONTAGE**
VORRICHTUNG ZUM HALTEN EINES KABELBÜNDELS, MIT MINDESTENS EINER SOLCHEN VORRICHTUNG AUSGESTATTETE KABELBAHN UND MONTAGEVERFAHREN
DEVICE FOR HOLDING A BUNDLE OF CABLES, CABLE TRACK EQUIPPED WITH AT LEAST ONE SUCH DEVICE, AND ASSEMBLY METHOD

(30) Priorité: 09.03.2021 FR 2102240
(43) Date de publication de la demande: 17.01.2024
(73) Titulaire: LATELEC, 31500 Toulouse (FR)
(72) Inventeur: ENGLAND, Sam, BRISTOL BS7-9NF (GB)
(74) Mandataire: Junca, Eric
(86) Numéro de dépôt international: PCT/EP2022/055776
(87) Numéro de publication internationale: WO 2022/189367

(56) Documents cités:
- WO-A2-2011/027002
- FR-A1- 2 925 781
- US-A- 2 938 692
- US-A1- 2015 226 354

## Description

### Domaine technique

La présente invention se rapporte à un dispositif de maintien d'un faisceau de câbles dans le canal d'un chemin de câbles, le chemin de câbles comportant au moins un canal équipé d'au moins un tel dispositif de maintien, ainsi qu'un procédé de montage de ce dispositif dans un tel chemin de câbles.

Les faisceaux de câbles, ou harnais, utilisés dans un véhicule générant des vibrations, en particulier dans des aéronefs, sont généralement disposés dans des canaux d'un chemin de câbles, pouvant comporter plusieurs pistes parallèles recevant chacune un faisceau qui doit être maintenu à l'intérieur.

Chaque faisceau guidé et fixé dans un canal est ainsi protégé des autres faisceaux voisins ainsi que de l'environnement immédiat, en particulier contre des contraintes mécaniques comme des frottements pouvant provoquer des usures aux revêtements des câbles.

### Etat de la technique

Un dispositif de maintien d'un faisceau de câbles connu, présenté notamment par le document US 4136257A, utilise un canal de chemin de câbles formant un « U » ouvert sur le dessus, comprenant sur ses deux flancs des fentes verticales rapprochées débouchant vers le haut, et qui laissent entre elles une succession régulière de pattes verticales.

Chaque patte verticale peut recevoir une agrafe comprenant un contour s'ajustant autour de cette patte, équipée d'un rebord dépassant dans le canal pour venir au-dessus du faisceau. En descendant l'agrafe par un coulissement de son contour le long de la patte, on vient appuyer son rebord sur le faisceau pour le maintenir au fond du canal. En fin de mouvement le contour se bloque sur des bossages formés sur le côté de la patte pour verrouiller sa hauteur.

Toutefois ce dispositif de maintien nécessite de découper les flancs des canaux pour former les pattes réparties sur la longueur, ce qui complique la réalisation du chemin de câbles.

De plus dans le cas de deux canaux parallèles formés sur un même chemin de câbles, possédant une paroi commune formant les flancs de ces deux canaux, il faut réaliser les fentes verticales sur cette paroi pour obtenir les pattes. Le contour des agrafes entourant une patte pour disposer le rebord d'appui dans un canal, dépasse en partie dans le canal d'à-côté ce qui peut poser des problèmes d'encombrement dans ce dernier canal.

D'autres dispositifs de maintien connus utilisent des perçages formés au fond des canaux pour recevoir des fixations du faisceau, ce qui complique aussi la réalisation du chemin de câbles.

Notamment, certains faisceaux électriques sensibles, transmettant des signaux électriques ou des courants de puissance, en particulier pour les aéronefs, doivent présenter une protection contre les ondes électromagnétiques qu'ils émettent pour éviter de les transmettre aux faisceaux proches, ou d'en recevoir de ces faisceaux proches.

Les faisceaux électriques doivent aussi être protégés contre les risques d'arcs électriques qui pourraient se former vers l'extérieur de leurs canaux, en particulier du fait de perçages de ces canaux pour la fixation de ces faisceaux. Les canaux présentant des ouvertures comme les fentes sur les flancs ou les perçages sur le fond assurent moins bien cette protection.

D'autres dispositifs de maintien connus comportent des supports fixés sur le dessus du canal, présentant un appui élastique descendant à l'intérieur pour appuyer sur le faisceau en le maintenant au fond de son canal. Cependant pour des faisceaux présentant des diamètres variés, les appuis élastiques vont serrer différemment le faisceau suivant son diamètre. On obtient un serrage qui n'est pas uniforme, pouvant entraîner des risques de défaillance.

En variante on peut prévoir des dispositifs de maintien avec plusieurs supports présentant des dimensions différentes adaptées à des diamètres de faisceaux variés. Il faut dans ce cas prévoir plusieurs références de supports, ce qui complique le montage du faisceau lors de l'assemblage initial ou d'opérations de maintenance, augmente les coûts, et peut entraîner des erreurs suite à un mauvais choix de dimension du support.

De tels dispositifs de maintien sont décrits, notamment, dans les documents US2938692A, FR2925781A1 et US2015/226354A1.

### Exposé de l'invention

La présente invention a notamment pour but d'éviter ces problèmes de l'art antérieur. Elle propose à cet effet de disposer d'un moyen local de blocage réversible du faisceau de câbles dans un canal capable d'exercer une pression modulable sur ce faisceau.

Plus précisément, la présente invention a pour objet un dispositif de maintien d'un faisceau de câbles dans un canal de chemin de câbles, un tel canal comprenant un fond encadré par deux flancs parallèles. Le dispositif de maintien comporte un support présentant des faces parallèles dites supérieure et inférieure et, perpendiculairement à cette face supérieure, deux parois latérales, parallèles et opposées. Ces parois sont munies de fixations rétractables destinées à être fixées sur les flancs du canal. Ce support présente un perçage central de guidage s'étendant le long d'un axe perpendiculaire à la face supérieure. Une tige d'un poussoir mobile est logée dans ce perçage, la tige étant terminée par une embase orthogonale à la tige, apte à venir exercer une pression sur ledit faisceau, et ledit perçage comporte un système de blocage anti-retour de la tige autorisant son avance dans un sens éloignant ladite embase tout en empêchant son recul dans le sens inverse.

Un avantage de ce dispositif de maintien est qu'il permet dans chaque canal d'un chemin de câbles pouvant comporter plusieurs canaux parallèles, et après avoir disposé le faisceau dans ce canal, de fixer le support de manière individuelle en l'accrochant sur les flancs intérieurs du canal, puis par un simple mouvement de pression du doigt n'utilisant pas d'outil, de descendre le poussoir pour mettre son embase en appui sur le faisceau. Le poussoir garde ensuite sa position avec l'embase serrant alors le faisceau grâce à son blocage anti-retour.

On obtient un montage individuel et rapide du faisceau qui en chaque endroit peut être maintenu et serré dans un canal comportant un fond et des flancs continus, ce qui permet avec un seul type de dispositif de maintien de réaliser facilement le montage initial, et, si nécessaire, d'intervenir individuellement et localement sur le faisceau pour des opérations de maintenance. De plus les canaux présentant un contour continu sans ouverture permettent une fabrication simplifiée, ainsi qu'une bonne protection électrique et électromagnétique.

Le dispositif de maintien selon l'invention peut avantageusement comporter de plus une ou plusieurs des caractéristiques préférées suivantes, qui peuvent être combinées entre elles.

Avantageusement, le système de blocage comporte des cliquets élastiques fixés dans le perçage du support, ces cliquets étant engagés dans des dentures liées à la tige du poussoir.

Dans ce cas, le perçage de guidage comporte de préférence deux cliquets, chaque cliquet étant engagé dans une des deux dentures formées sur deux surfaces opposées de la tige.

De plus, avantageusement, le perçage de guidage comporte au moins une nervure parallèle à son axe qui est engagée dans une rainure correspondante de la tige pour la guider.

Avantageusement, les parois latérales du support comportent des bossages prolongeant la face supérieure présentant une face inférieure destinée à servir d'appui sur les flancs du canal.

Dans ce cas, l'une des parois latérales présente un bossage central, et l'autre paroi deux bossages formant entre eux un creux complémentaire du bossage central.

Avantageusement, les fixations rétractables des parois latérales du support sont constituées par au moins un crochet élastique, apte à s'engager dans une rainure formée le long de chaque flanc de canal.

Avantageusement, chaque crochet peut présenter une avancée qui se projette hors de la paroi latérale. Cette avancée possède une extrémité libre du côté de la face supérieure du support et est rattachée à ladite paroi par un biseau du côté de la face inférieure de support.

En particulier le support peut comporter au moins un crochet sur chaque paroi latérale, afin de conserver au moins une prise de chaque côté en cas de détachement d'un crochet.

En outre, l'extrémité libre de l'avancée de chaque crochet peut se présenter sous la forme d'une languette disposée avec un jeu dans un logement s'étendant parallèlement à l'axe du perçage.

Dans ce cas, avantageusement, le dispositif de maintien comporte un outil de dégagement comprenant, à une extrémité, des pointes aptes à s'engager le long des logements des crochets d'une même paroi latérale pour pousser ces crochets vers le perçage central.

De plus, avantageusement, l'outil de dégagement comporte des bras à une autre extrémité qui peuvent s'engager dans le perçage central comportant les cliquets élastiques pour dégager ces cliquets de la denture du poussoir.

L'invention se rapporte également à un chemin de câbles comportant au moins un canal dans lequel un faisceau de câbles est guidé, le faisceau étant maintenu par un ou plusieurs dispositifs de maintien régulièrement espacés.

L'invention a également pour objet un procédé de montage d'un dispositif de maintien tel que défini ci-dessus dans ledit chemin de câbles, comportant une étape de fixation du support sur les flancs du canal par : introduction du dispositif vers le fond de canal, le dispositif étant dimensionné de sorte que les parois du support viennent affleurer les flancs, les crochets étant alors rétractées dans les parois latérales du support ; arrêt de cette introduction lorsque les bossages reposent sur des bords supérieurs des flancs de canal et que, simultanément, les crochets viennent s'insérer dans la rainure formée dans chaque flanc de canal ; puis une étape de serrage du faisceau de câbles en pressant sur la tige du poussoir.

Ce procédé de montage peut être suivi ultérieurement d'une étape de détachement du dispositif de maintien par retrait des crochets du support à l'aide de l'outil de dégagement défini ci-dessus par insertion des pointes le long des logements des crochets de chaque paroi latérale pour les pousser vers le perçage central et retirer ainsi le support des flancs du canal, puis une étape d'écartement du système de blocage anti-retour et de recul du poussoir par engagement des bras de l'outil de dégagement contre les cliquets élastiques du perçage central pour dégager ces cliquets de la denture du poussoir.

Dans le présent texte, le qualificatif « supérieur » ou « dessus », respectivement « inférieur » ou « en-dessous », se rapporte à une partie d'un élément située en mode utilisation au plus loin, respectivement au plus près du fond du canal correspondant. De plus « horizontal », respectivement « vertical », qualifie un élément qui s'étend en mode utilisation dans un plan parallèle, respectivement selon un axe perpendiculaire, au fond du canal correspondant.

### Présentation des figures

L'invention sera mieux comprise et d'autres caractéristiques et avantages apparaîtront de manière détaillée à la lecture de la description ci-après donnée à titre d'exemple non limitatif, en référence aux dessins annexés qui représentent respectivement :
[Fig. 1] une vue d'un dispositif de maintien selon l'invention fixé dans un canal d'un chemin de câbles ;
[Fig. 2] une vue de ce dispositif de maintien seul ;
[Fig. 3] une vue du support de ce dispositif de maintien présentant successivement le dessous et le dessus dudit dispositif ;
[Fig. 4] une vue du poussoir de ce dispositif de maintien ;
[Fig. 5] une vue présentant la dépose du support hors du canal ; et
[Fig. 6] une vue présentant le déblocage du poussoir de ce support.

### Description détaillée

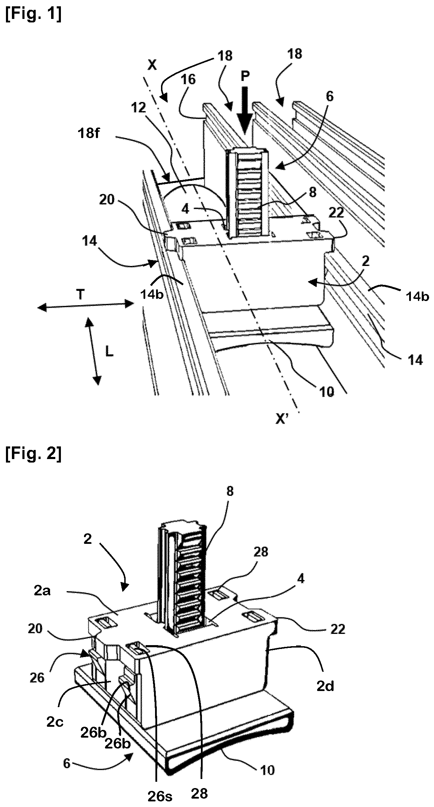

La figure 1 présente un chemin de câbles comprenant plusieurs canaux parallèles 18, comportant une direction longitudinale L disposée suivant la longueur de ce chemin, et une direction transversale T perpendiculaire.

Chaque canal 18 présente une section transversale rectangulaire ouverte vers le haut, formée par un fond plat 18f et deux flancs parallèles 14 disposant chacun d'une rainure longitudinale 16 tournée vers l'axe X'X de ce canal.

Les figures 1 et 2 illustrent un dispositif de maintien serrant le faisceau 12 au fond 18f du canal 18. Ce dispositif comporte un support 2 fixé de chaque côté dans la rainure longitudinale 16 d'un flanc 14, et ce support 2 reçoit une tige 8 d'un poussoir 6 dans un perçage de guidage 4 formé au centre du support 2.

Une embase 10 sensiblement plate est fixée à l'extrémité inférieure de la tige 8, en-dessous du support 2. Cette embase présente une forme globalement rectangulaire ajustée entre les flancs du canal 14, et dépassant du support 2 dans la direction longitudinale L dudit canal. La face inférieure de l'embase 10 comporte une surface active présentant dans la direction transversale une courbure convexe qui s'ajuste sur le faisceau 12, pour répartir la pression en évitant une contrainte mécanique trop forte qui pourrait l'endommager.

D'une manière générale, le faisceau de câbles peut comporter un ou plusieurs câbles de toute nature, comprenant par exemple des câbles électriques, des fibres optiques ou des canalisations, notamment des harnais ou faisceaux de câbles utilisés plus particulièrement dans l'aéronautique. Le chemin de câbles sans ouverture sur sa longueur est formé dans cet exemple par un procédé d'extrusion en continu.

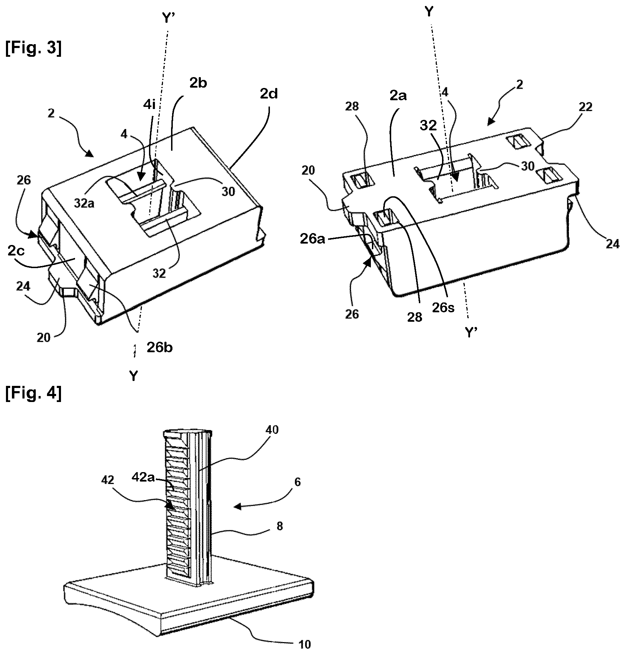

La figure 3 présente le support 2 comportant une forme sensiblement parallélépipédique allongée suivant la direction transversale T, avec des faces supérieure 2a et inférieure 2b et des parois latérales opposées 2c et 2d, qui s'étendent perpendiculairement à la direction transversale T. Selon cette direction T, le support 2 comporte, sur le dessus des bords 14b des flancs 14, d'un côté un bossage central 20 et, de l'autre côté, deux bossages latéraux 22 laissant entre eux un creux correspondant au bossage central d'un autre support non représenté, destiné à un canal juxtaposé 18. Ces bossages 20, 22 présentent des faces inférieures 24 disposées dans un même plan, venant en appui sur le dessus des bords de flancs 14b.

Le creux entre les bossages latéraux 22 permet dans le cas de deux canaux 18 juxtaposés sur un même chemin de câbles, de disposer dans ces canaux deux supports 2 transversalement alignés (selon la direction T), le bossage central 20 d'un support s'ajustant dans le creux de l'autre support.

Les bossages 20 et 22 sont formés sur les parois latérales 2c et 2d du support 2 tout en prolongeant la face supérieure 2a du support 2.

Chaque côté du support 2, les parois latérales 2c et 2d comportent sous les bossages 20, 22, deux crochets élastiques rétractables 26 s'étendant transversalement, en dépassant sur les côtés du support 2 par une avancée 26a du côté de la face supérieure 2a. Cette avancée 26a, sensiblement plane et horizontale en utilisation, prolonge par une extrémité libre 26s du côté de la face supérieure 2a du support 2, et se rattache à la paroi 2c, 2d par un biseau 26b du côté de la face inférieure 2b du support 2.

Les biseaux 26b forment des faces inclinées permettant, lors de la descente dans le canal 18, la rétractation des crochets 26 par compression sur les flancs 14, jusqu'à ce que les avancées 26a arrivent au niveau de la rainure longitudinale 16 disposée le long de chaque flanc 14. Les avancées 26a des crochets 26 se détendent alors en s'ajustant dans les rainures 16, empêchant ainsi la remontée du support 2.

Chaque crochet 26 lié au support 2 par l'extrémité inférieure de son biseau 26b, se prolonge par l'extrémité libre 26s de son avancée 26a qui arrive au niveau de la face supérieure 2a de ce support dans un logement vertical 28 avec un jeu, permettant un mouvement transversal du crochet 26 de faible amplitude dans ce logement 28.

Le perçage de guidage 4 disposé au centre du support 2 comporte une section horizontale sensiblement rectangulaire et s'étend le long d'un axe Y'Y perpendiculaire aux faces parallèles 2a et 2b. Ce perçage 4 comprend de chaque côté, selon la direction transversale, une nervure centrale verticale de guidage 30.

Le perçage de guidage 4 comporte également deux cliquets élastiques 32 qui s'étendent sensiblement transversalement. Chaque cliquet 32 est fixé au support 2 par son extrémité supérieure, et comprend à son extrémité inférieure un ergot 32a tournée vers le centre du perçage 4.

La figure 4 se rapporte en particulier à la tige 8 du poussoir 6 comprenant une section s'ajustant dans le perçage de guidage 4 du support 2, comportant de chaque côté dans la direction transversale une rainure 40 recevant une nervure 30 du perçage pour assurer le centrage de la tige dans ce perçage.

Chaque surface opposée de la tige 8 tournée selon la direction longitudinale en mode utilisation, comporte une denture 42 équipée d'une série de dents 42a comprenant une face inférieure inclinée et une face supérieure horizontale en mode utilisation. Chaque denture 42 reçoit l'ergot 32a d'un des cliquets 32 du support 2 qui peut ainsi pendant la descente du poussoir 6 glisser sur les faces inférieures inclinées de cette denture avec un recul élastique. En fin de descente, l'ergot 32a de chaque cliquet 32 se bloque sur la face supérieure horizontale d'une des dents 42a de la denture 42, empêchant ainsi la remontée du poussoir 8.

De cette manière, à partir d'une position haute du poussoir 6 dans le support 2 - c'est-à-dire avec l'embase 10 disposée contre ou à proximité de la face inférieure 2b du support 2 (cf. figure 2) - une poussée P simple et rapide (cf. figure 1), exercée sans outillage par un doigt pressant sur l'extrémité supérieure de la tige 8, descend ce poussoir pour mettre l'embase 10 en appui sur le faisceau 12. Après un relâchement du doigt, le poussoir 6 ne peut plus remonter, le faisceau 12 étant alors calé en position au fond du canal 18f.

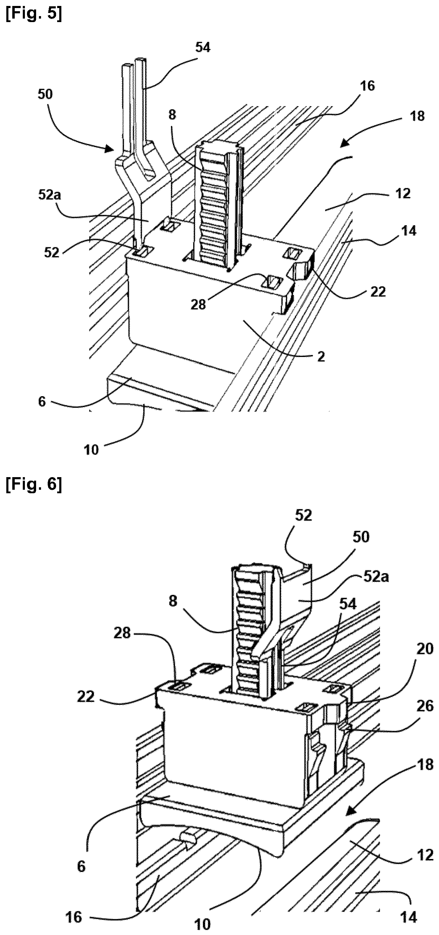

La figure 5 présente un outil de dégagement 50 pouvant avantageusement faire partie du dispositif de maintien. Cet outil 50 dispose d'une étendue de forme plate, qui comprend en partie inférieure une plaque 52a se terminant par deux pointes espacées 52 tournées vers le bas.

Chaque pointe 52 descend dans un logement vertical 28 d'une extrémité libre 26s de crochet 26, en prenant appui du côté des crochets 26 se trouvant le plus éloignée du perçage central 4. Une poussée manuelle sur l'outil de dégagement 50 permet alors de reculer chacun des deux crochets 26 vers le centre du support 6, ce qui les dégage de la rainure longitudinale 16 du flanc du canal 14.

On peut ainsi soulever un côté du support 2 formé par l'une des parois latérales 2c ou 2d, après avoir dégagé ses crochets 26, puis pratiquer de la même manière et simultanément de l'autre côté pour dégager les deux autres crochets. Le dispositif de maintien complet est alors libéré du chemin de câbles.

La figure 6 illustre l'outil de dégagement 50 en position retournée, comprenant deux bras parallèles 54 tournés vers le bas et s'étendant dans un plan parallèle décalé vers l'intérieur du canal 18 par rapport à la plaque 52a comprenant les pointes 52, afin d'éloigner cette plaque de la tige 8. Dans cette position, l'outil 50 permet de libérer le poussoir 6 comme décrit ci-dessous.

Chaque bras parallèle 54 est inséré dans le perçage du support 4 contre une face de la tige de poussoir 8, dans la direction longitudinale L, plus précisément entre un cliquet 32 et cette tige 8. Puis, en descendant l'outil de dégagement 50, chaque extrémité de bras 54 presse sur un cliquet 32 pour le repousser dans la direction longitudinale en direction opposée au perçage central 4, ce qui permet de dégager l'ergot 32a de ce cliquet 32 de la denture 42 de la tige de poussoir 8.

En tirant sur l'extrémité supérieure de la tige de poussoir 8, on remonte le poussoir 6 qui est alors libéré. Le poussoir est ainsi remis en position supérieure, et le dispositif de maintien complet, qui se trouve dans sa position initiale, peut alors être réutilisé, ce qui permet de réduire les coûts.

Avantageusement le support 2 et le poussoir 6 sont formés chacun d'une seule pièce par un moulage en matière plastique, qui permet de réaliser de manière économique les formes complexes de ces pièces.

L'invention n'est pas limitée aux exemples décrits et représentés. Le système de blocage anti-retour peut être formé d'éléments à crémaillère ou d'une extension rétractable disposée dans les parois du perçage et apte à venir s'insérer de manière réversible dans la denture de la tige du poussoir. Par ailleurs, les crochets rétractables peuvent être constitués de billes ou glissières rendues amovibles par l'exercice d'une pression exercée par un ressort de rappel. En outre, dans l'exemple de réalisation, les logements des extrémités libres peuvent être ouverts et les bossages restent facultatifs ou n'exister que sur un côté. De plus, le perçage central peut être décalé transversalement d'un côté ou de l'autre du support.

## Revendications

1. Dispositif de maintien d'un faisceau de câbles (12) dans un canal (18) d'un chemin de câbles comprenant un fond (18f) encadré par deux flancs parallèles (14), le dispositif comprenant un support (2) présentant des faces parallèles dites supérieure (2a) et inférieure (2b) et, perpendiculairement à ces faces, deux parois latérales, parallèles et opposées (2c, 2d), munies de fixations rétractables (26) destinées à être fixées sur les flancs (14) du canal (18) et comportant des avancées adaptées à se détendre en s'ajustant dans des rainures (16) formées le long de chaque flanc (14) du canal (18), ledit support (2) présentant un perçage central de guidage (4) s'étendant le long d'un axe (Y'Y) perpendiculaire à la face supérieure (2a), et dans lequel est logée une tige (8) d'un poussoir mobile (6), la tige étant terminée par une embase orthogonale (10) dépassant de la face inférieure (2b) du support (2) et apte à venir exercer une pression sur ledit faisceau (12), ledit perçage comportant un système de blocage anti-retour du poussoir (6) autorisant son avance dans un sens éloignant ladite embase (10) de la face inférieure (2b) tout en empêchant son recul dans le sens inverse, **caractérisé en ce que** le système de blocage est constitué de cliquets élastiques (32) fixés dans le perçage (4) du support (2), ces cliquets étant engagés dans des dentures (42) liées au poussoir (6).

2. Dispositif de maintien selon la revendication 1, dans lequel le perçage central de guidage (4) comporte deux cliquets (32) qui sont engagés dans deux dentures (42) formées sur deux surfaces opposées de la tige (8).

3. Dispositif de maintien selon l'une quelconque des revendications précédentes, **caractérisé en ce que** le perçage central de guidage (4) comporte au moins une nervure (30) parallèle à son axe (Y'Y) qui est engagée dans une rainure correspondante (40) de la tige (8) pour la guider.

4. Dispositif de maintien selon l'une quelconque des revendications précédentes, **caractérisé en ce que** les parois latérales (2c, 2d) comportent des bossages (20, 22) prolongeant la face supérieure (2a) et présentant une face inférieure (24) destinée à servir d'appui sur les flancs de canal (14).

5. Dispositif de maintien selon la revendication 4, dans lequel l'une des parois latérales (2c) présente un bossage central (20), et l'autre paroi (2d) deux bossages (22) formant entre eux un creux (24) complémentaire du bossage central (20).

6. Dispositif de maintien selon l'une quelconque des revendications précédentes, **caractérisé en ce que** les fixations rétractables (26) des parois latérales (2c, 2d) du support (2) sont constituées par au moins un crochet élastique (26) apte à s'engager dans une desdites rainures (16).

7. Dispositif de maintien selon la revendication 6, dans lequel chaque crochet (26) présente une avancée (26a) qui se projette hors de la paroi latérale (2c, 2d), cette avancée (26a) possède une extrémité libre (26s) du côté de la face supérieure de support (2a) et est rattachée à ladite paroi (2c, 2d) par un biseau (26b) du côté de la face inférieure de support (2b).

8. Dispositif de maintien selon la revendication 7, dans lequel le support (2) comporte au moins un crochet (26) sur chaque paroi latérale (2c, 2d).

9. Dispositif de maintien selon l'une quelconque des revendications 7 ou 8, dans lequel l'extrémité supérieure libre (26s) de l'avancée (26a) de chaque crochet (26) se présente sous la forme d'une languette disposée avec un jeu dans un logement (28) s'étendant parallèlement à l'axe de perçage (Y'Y).

10. Dispositif de maintien selon la revendication 9, **caractérisé en ce qu'**il comporte deux crochets (26) et deux logements (28) sur chaque paroi latérale, et **en ce qu'**il comporte un outil de dégagement (50) comprenant à une extrémité des pointes (52) aptes à s'engager le long des logements (28) des crochets (26) d'une même paroi latérale (2c ; 2d) pour pousser ces crochets vers le perçage central (2).

11. Dispositif de maintien selon la revendication 10, dans lequel l'outil de dégagement (50) comporte de plus des bras (54) à une autre extrémité qui peuvent s'engager dans le perçage central (4) comportant les cliquets élastiques (32) pour dégager ces cliquets (32) des dentures (42) du poussoir (6).

12. Chemin de câbles comportant au moins un canal (18) dans lequel un faisceau de câbles (12) est guidé, **caractérisé en ce que** ledit faisceau (12) est maintenu par au moins un dispositif de maintien selon l'une quelconque des revendications 1 à 11.

13. Procédé de montage d'un dispositif de maintien selon la revendication 6 combinée à la revendication 4 dans un chemin de câbles selon la revendication 12, **caractérisé en ce qu'**il comporte une étape de fixation du support (2) sur les flancs (14) du canal (18) par :
- introduction du dispositif vers le fond de canal (18f), le dispositif étant dimensionné de sorte que les parois latérales (2c, 2d) du support viennent affleurer les flancs (14), les crochets (26) étant alors rétractées dans les parois latérales du support ;
- arrêt de cette introduction lorsque les bossages (20, 22) reposent sur des bords supérieurs (14b) des flancs de canal (14) et que, simultanément, les crochets (26) viennent s'insérer dans la rainure (16) formée le long de chaque flanc de canal (14);
puis une étape de serrage du faisceau de câbles (12) par l'embase de poussoir (10) en pressant sur la tige (8) du poussoir (6).

14. Procédé de démontage d'un dispositif de maintien selon les revendications 4 et 6, **caractérisé en ce qu'**après mise en œuvre du procédé selon la revendication 13, ce dispositif est détaché ultérieurement par une étape de retrait des crochets (26) du support (2) des flancs de canal (14) à l'aide de l'outil de dégagement (50) par insertion des pointes (52) le long des logements de crochets (28) pour les pousser vers le perçage central (4) et retirer ainsi le support (2) des flancs de canal (14), puis une étape d'écartement du système de blocage anti-retour et de recul du poussoir (6) par engagement des bras (54) de l'outil de dégagement (50) contre les cliquets élastiques (32) du perçage central (4) pour dégager ces cliquets de la denture de poussoir (42).

## Patentansprüche

1. Vorrichtung zum Halten eines Kabelbündels (12) in einem Kanal (18) einer Kabelbahn, der einen Boden (18f) beinhaltet, der von zwei parallelen Flanken (14) eingerahmt wird, wobei die Vorrichtung einen Träger (2) beinhaltet, der Folgendes aufweist: eine als obere (2a) und eine als untere (2b) bezeichnete Fläche, die parallel sind, und senkrecht zu diesen Flächen zwei parallele und entgegengesetzte Seitenwände (2c, 2d), die über versenkbare Befestigungen (26) verfügen, die dazu bestimmt sind, an den Flanken (14) des Kanals (18) befestigt zu werden, und Vorsprünge umfassen, die dazu angepasst sind, sich zu entspannen, wenn sie in Nuten (16) zu liegen kommen, die entlang jeder Flanke (14) des Kanals (18) gebildet sind, wobei der Träger (2) eine zentrale Führungsbohrung (4) aufweist, die sich entlang einer zu der oberen Fläche (2a) senkrechten Achse (Y'Y) erstreckt und in der eine Stange (8) eines beweglichen Druckelements (6) aufgenommen ist, wobei die Stange in einem orthogonalen Sockel (10) endet, der über die untere Fläche (2b) des Trägers (2) vorsteht und dazu angepasst ist, Druck auf das Bündel (12) auszuüben, wobei die Bohrung ein Rückzugsperrsystem für das Druckelement (6) umfasst, das dessen Vorschub in einer Richtung, die den Sockel (10) von der unteren Fläche (2b) entfernt, gestattet, aber seine Rückbewegung in der umgekehrten Richtung verhindert, **dadurch gekennzeichnet, dass** das Sperrsystem aus elastischen Klinken (32) besteht, die in der Bohrung (4) des Trägers (2) befestigt sind, wobei diese Klinken in Verzahnungen (42) eingreifen, die mit dem Druckelement (6) verbunden sind.

2. Haltevorrichtung nach Anspruch 1, wobei die zentrale Führungsbohrung (4) zwei Klinken (32) umfasst, die in zwei Verzahnungen (42) eingreifen, die an zwei entgegengesetzten Oberflächen der Stange (8) gebildet sind.

3. Haltevorrichtung nach einem der vorhergehenden Ansprüche, **dadurch gekennzeichnet, dass** die zentrale Führungsbohrung (4) mindestens eine Rippe (30) parallel zu ihrer Achse (Y'Y) umfasst, die in eine entsprechende Nut (40) der Stange (8) eingreift, um diese zu führen.

4. Haltevorrichtung nach einem der vorhergehenden Ansprüche, **dadurch gekennzeichnet, dass** die Seitenwände (2c, 2d) Nasen (20, 22) umfassen, die die obere Fläche (2a) verlängern und eine untere Fläche (24) aufweisen, die zur Abstützung auf den Kanalflanken (14) dient.

5. Haltevorrichtung nach Anspruch 4, wobei eine der Seitenwände (2c) eine zentrale Nase (20) aufweist und die andere Wand (2d) zwei Nasen (22) aufweist, die zwischen sich eine Vertiefung (24) bilden, die zu der zentralen Nase (20) komplementär ist.

6. Haltevorrichtung nach einem der vorhergehenden Ansprüche, **dadurch gekennzeichnet, dass** die versenkbaren Befestigungen (26) der Seitenwände (2c, 2d) des Trägers (2) aus mindestens einem elastischen Haken (26) bestehen, der dazu fähig ist, in eine der Nuten (16) einzugreifen.

7. Haltevorrichtung nach Anspruch 6, wobei jeder Haken (26) einen Vorsprung (26a) aufweist, der von der Seitenwand (2c, 2d) vorsteht, dieser Vorsprung (26a) ein freies Ende (26s) auf der Seite der oberen Trägerfläche (2a) besitzt und durch eine Schrägfläche (26b) auf der Seite der unteren Trägerfläche (2b) an der Wand (2c, 2d) angebracht ist.

8. Haltevorrichtung nach Anspruch 7, wobei der Träger (2) mindestens einen Haken (26) an jeder Seitenwand (2c, 2d) umfasst.

9. Haltevorrichtung nach einem der Ansprüche 7 oder 8, wobei das freie obere Ende (26s) des Vorsprungs (26a) jedes Hakens (26) in Form einer Lasche vorliegt, die mit Spiel in einer Aufnahme (28) angeordnet ist, die sich parallel zu der Bohrungsachse (Y'Y) erstreckt.

10. Haltevorrichtung nach Anspruch 9, **dadurch gekennzeichnet, dass** sie zwei Haken (26) und zwei Aufnahmen (28) an jeder Seitenwand umfasst und dass sie ein Lösewerkzeug (50) umfasst, das an einem Ende Zacken (52) beinhaltet, die dazu fähig sind, entlang der Aufnahmen (28) der Haken (26) einer gleichen Seitenwand (2c; 2d) einzugreifen, um diese Haken zu der zentralen Bohrung (2) hin zu drücken.

11. Haltevorrichtung nach Anspruch 10, wobei das Lösewerkzeug (50) an einem anderen Ende ferner Arme (54) umfasst, die in die zentrale Bohrung (4), die die elastischen Klinken (32) umfasst, eingreifen können, um diese Klinken (32) von den Verzahnungen (42) des Druckelements (6) zu lösen.

12. Kabelbahn, die mindestens einen Kanal (18) umfasst, in dem ein Kabelbündel (12) geführt wird, **dadurch gekennzeichnet, dass** das Bündel (12) durch mindestens eine Haltevorrichtung nach einem der Ansprüche 1 bis 11 gehalten wird.

13. Verfahren zur Montage einer Haltevorrichtung nach Anspruch 6 in Kombination mit Anspruch 4 in einer Kabelbahn nach Anspruch 12, **dadurch gekennzeichnet, dass** es einen Schritt des Befestigens des Trägers (2) an den Flanken (14) des Kanals (18) durch Folgendes umfasst:
- Einführen der Vorrichtung in Richtung des Kanalbodens (18f), wobei die Vorrichtung so bemessen ist, dass die Seitenwände (2c, 2d) des Trägers an den Flanken (14) bündig zu liegen kommen, wobei die Haken (26) dabei in den Seitenwänden des Trägers versenkt werden;
- Stoppen dieses Einführens, wenn die Nasen (20, 22) auf den oberen Rändern (14b) der Kanalflanken (14) aufliegen und sich gleichzeitig die Haken (26) in die Nut (16) einfügen, die entlang jeder Kanalflanke (14) gebildet ist;
dann einen Schritt des Klemmens des Kabelbündels (12) mit dem Druckelementsockel (10) durch Drücken auf die Stange (8) des Druckelements (6).

14. Verfahren zur Demontage einer Haltevorrichtung nach den Ansprüchen 4 und 6, **dadurch gekennzeichnet, dass** nach der Umsetzung des Verfahrens nach Anspruch 13 diese Vorrichtung zu einem späteren Zeitpunkt durch Folgendes gelöst wird: einen Schritt des Entfernens der Haken (26) des Trägers (2) aus den Kanalflanken (14) mit Hilfe des Lösewerkzeugs (50) durch Einführen der Spitzen (52) entlang der Hakenaufnahmen (28), um sie zu der zentralen Bohrung (4) hin zu drücken und so den Träger (2) von den Kanalflanken (14) zu entfernen, dann einen Schritt des Aufspreizens des Rückzugsperrsystems und des Rückbewegens des Druckelements (6) durch Eingreifen der Arme (54) des Lösewerkzeugs (50) gegen die elastischen Klinken (32) der zentralen Bohrung (4), um diese Klinken von der Druckelementverzahnung (42) zu lösen.

## Claims

1. Device for holding a bundle of cables (12) in a channel (18) of a cable tray comprising a bottom (18f) framed by two parallel sides (14), the device comprising a support (2) having parallel upper (2a) and lower (2b) faces and, perpendicular to these faces, two parallel and opposite side walls (2c, 2d), provided with retractable fasteners (26) intended to be fastened to the sides (14) of the channel (18) and comprising projections adapted to expand by fitting into grooves (16) formed along each side (14) of the channel (18), said support (2) having a central guide hole (4) extending along an axis (Y'Y) perpendicular to the upper face (2a), and in which is housed a rod (8) of a movable push rod (6), the rod ending in an orthogonal base (10) protruding from the lower face (2b) of the support (2) and capable of exerting pressure on said beam (12), said hole comprising a system for locking the push rod (6) against return, allowing it to advance in a direction away from said base (10) from the lower face (2b) while preventing its backward movement in the opposite direction, **characterized in that** the locking system consists of elastic pawls (32) fixed in the hole (4) of the support (2), these pawls being engaged in teeth (42) connected to the push rod (6).

2. Holding device according to claim 1, wherein the central guide hole (4) comprises two pawls (32) which are engaged in two teeth (42) formed on two opposite surfaces of the rod (8).

3. A holding device according to any of the preceding claims, **characterized in that** the central guide hole (4) comprises at least one rib (30) parallel to its axis (Y'Y) which is engaged in a corresponding groove (40) in the rod (8) to guide it.

4. A holding device according to any of the preceding claims, **characterized in that** the side walls (2c, 2d) comprise bosses (20, 22) extending from the upper face (2a) and having a lower face (24) intended to serve as a support on the sides of the channel (14).

5. Holding device according to claim 4, in which one of the side walls (2c) has a central boss (20), and the other wall (2d) has two bosses (22) forming between them a recess (24) complementary to the central boss (20).

6. Holding device according to any of the preceding claims, **characterized in that** the retractable fasteners (26) of the side walls (2c, 2d) of the support (2) consist of at least one elastic hook (26) capable of engaging in one of said grooves (16).

7. Holding device according to claim 6, in which each hook (26) has a projection (26a) that protrudes from the side wall (2c, 2d), this projection (26a) has a free end (26s) on the side of the upper support face (2a) and is attached to said wall (2c, 2d) by a bevel (26b) on the side of the lower support face (2b).

8. Holding device according to claim 7, wherein the support (2) comprises at least one hook (26) on each side wall (2c, 2d).

9. Holding device according to any of claims 7 or 8, wherein the upper free end (26s) of the projection (26a) of each hook (26) is in the form of a tongue disposed with clearance in a housing (28) extending parallel to the drilling axis (Y'Y).

10. Holding device according to claim 9, **characterized in that** it comprises two hooks (26) and two housings (28) on each side wall, and **in that** it comprises a release tool (50) comprising, at one end, tips (52) capable of engaging along the housings (28) of the hooks (26) of the same side wall (2c; 2d) to push these hooks towards the central hole (2).

11. Holding device according to claim 10, in which the release tool (50) further comprises arms (54) at another end which can engage in the central hole (4) comprising the elastic pawls (32) to release these pawls (32) from the teeth (42) of the push rod (6).

12. Cable tray comprising at least one channel (18) in which a cable bundle (12) is guided, **characterized in that** said bundle (12) is held by at least one holding device according to any of claims 1 to 11.

13. Method of mounting a holding device according to claim 6 combined with claim 4 in a cable tray according to claim 12, **characterized in that** it comprises a step of fixing the support (2) to the sides (14) of the channel (18) by:
- introducing the device towards the bottom of the channel (18f), the device being dimensioned so that the side walls (2c, 2d) of the support are flush with the sides (14), the hooks (26) then being retracted into the side walls of the support;
- stopping this insertion when the bosses (20, 22) rest on the upper edges (14b) of the channel sides (14) and, at the same time, the hooks (26) engage in the groove (16) formed along each channel side (14);

14. then a step of tightening the cable bundle (12) by the push rod base (10) by pressing on the rod (8) of the push rod (6).Method for dismantling a holding device according to claims 4 and 6, **characterized in that**, after implementing the method according to claim 13, this device is subsequently detached by a step of removing the hooks (26) from the support (2) of the channel sides (14) using the release tool (50) by inserting the tips (52) along the hook housings (28) to push them towards the central hole (4) and thus remove the support (2) from the channel sides (14), followed by a step of spreading the anti-return locking system and retracting the push rod (6) by engaging the arms (54) of the release tool (50) against the elastic pawls (32) of the central hole (4) to release these pawls from the pusher teeth (42).
